# EUROPÄISCHE PATENTSCHRIFT

(11) **EP 2 820 284 B1**
(45) Veröffentlichungstag und Bekanntmachung des Hinweises auf die Patenterteilung: **17.05.2017**
(21) Anmeldenummer: 13706971.2
(22) Anmeldetag: 26.02.2013
(51) Int. Cl.: F16K 11/052, F16K 11/22, F02M 35/10, F02M 26/64

(54) **MISCHVENTIL EINER BRENNKRAFTMASCHINE**
MIXING VALVE OF AN INTERNAL COMBUSTION ENGINE
VANNE MÉLANGEUSE D'UN MOTEUR À COMBUSTION INTERNE

(30) Priorität: 29.02.2012 DE 102012203156
(43) Veröffentlichungstag der Anmeldung: 07.01.2015
(73) Patentinhaber: Continental Automotive GmbH, 30165 Hannover (DE)
(72) Erfinder: WEIS, Christian, 55257 Budenheim (DE)
(86) Internationale Anmeldenummer: PCT/EP2013/053772
(87) Internationale Veröffentlichungsnummer: WO 2013/127763

(56) Entgegenhaltungen:
- EP-A1- 2 317 111
- FR-A1- 2 926 125
- US-A- 4 224 912
- US-B1- 6 216 737

## Beschreibung

Die Erfindung betrifft ein Mischventil einer Brennkraftmaschine eines Kraftfahrzeuges mit einer in einem Ansaugkanal angeordneten Ansaugklappe und einer in einem Abgaskanal angeordneten Abgasklappe, wobei der Ansaugkanal und der Abgaskanal in einen gemeinsamen Sammelkanal münden, und mit einer Antriebseinrichtung zum Antrieb der Ansaugklappe und der Abgasklappe, und wobei in einer ersten Stellung der Abgaskanal geschlossen und der Ansaugkanal geöffnet ist, mit einer mit einem Stellhebel der Abgasklappe und einem Stellhebel der Ansaugklappe gekoppelten Koppeleinrichtung.

Solche Mischventile werden bei Abgasrückführungssystemen von Brennkraftmaschinen heutiger Kraftfahrzeuge häufig eingesetzt und sind aus der EP 2 317 111 A1 bekannt. Die Bewegungen der Ansaugklappe und der Abgasklappe sind derart gesteuert, dass die Abgasklappe ausgehend von der ersten Stellung linear mit einem Ansteuersignal der Antriebseinrichtung öffnet. Die Ansaugklappe verharrt jedoch zunächst in der ersten Stellung und wird erst oberhalb eines vorgesehenen Ansteuersignals geschlossen. Durch die Koppelung der beiden Stellhebel genügt ein einziger Antrieb. Die Koppeleinrichtung hat einen Mitnehmer mit einem Totgang, welcher erst nach einer vorgesehenen Auslenkung des Stellhebels der Abgasklappe den Stellhebel der Ansaugklappe mitnimmt. Der Mitnehmer hat zudem ein Federelement zur Vorspannung der Ansaugklappe. Hierdurch weist das bekannte Mischventil jedoch einen hohen baulichen Aufwand auf.

Der Erfindung liegt das Problem zugrunde, ein Mischventil der eingangs genannten Art so weiter zu bilden, dass es wenige Bauteile benötigt und eine hohe Stabilität aufweist.

Dieses Problem wird erfindungsgemäß dadurch gelöst, dass die Koppeleinrichtung eine zur unmittelbaren Übertragung der Bewegungen der Stellhebel ausgebildete Koppelstange hat und dass in der ersten Stellung der Stellhebel der Abgasklappe und die Koppelstange im stumpfen Winkel und der Stellhebel der Ansaugklappe und die Koppelstange im spitzen Winkel zueinander angeordnet sind, und dass ausgehend von der ersten Stellung die Stellhebel und die Koppelstange derart angeordnet sind, dass die Bewegungen der Abgasklappe und der Ansaugklappe gegensinnig verlaufen und nach einer Teilbewegung gleichsinnig verlaufen. Damit werden die Bewegungen der Abgasklappe und der Ansaugklappe in zwei Teilbereiche unterteilt, nämlich einen ersten Teilbereich, in dem die Bewegungen gegensinnig verlaufen und in einen zweiten Teilbereich, in dem die Bewegungen gleichsinnig verlaufen.

Durch diese Gestaltung führt ausgehend von der ersten Stellung eine Auslenkung der Koppelstange zu einer wesentlich größeren Bewegung des Stellhebels der Abgasklappe als des Stellhebels der Ansaugklappe. Daher wird zunächst bei Bewegung der Abgaskanal stärker geöffnet als der Ansaugkanal geschlossen. Ausgehend von der beschriebenen Stellung wird zu Beginn der Bewegung der Koppelstange der Abgaskanal geöffnet, ohne dass sich der Querschnitt des Ansaugkanals wesentlich ändert. Damit verläuft die Schließbewegung des Ansaugkanals zunächst verzögert zu der Öffnungsbewegung des Abgaskanals. Durch die unmittelbare Übertragung der Bewegungen zwischen der Abgasklappe und der Ansaugklappe wird klargestellt, dass kein Totgang, Dämpfungs- oder Federelement in den Bauteilen des erfindungsgemäßen Mischventils erforderlich ist. Das Mischventil hat hierdurch eine besonders hohe Stabilität und setzt sich aus besonders wenigen Bauteilen zusammen. Zudem lässt sich auf diese Weise eine weitere Verzögerung des Schließens des Ansaugkanals beim Öffnen des Abgaskanals realisieren.

Die Bewegungsumkehr der Ansaugklappe lässt sich gemäß einer anderen vorteilhaften Weiterbildung der Erfindung einfach erzeugen, wenn sich der Stellhebel der Abgasklappe in der ersten Stellung vor einem Totpunkt, an dem dieser Stellhebel mit der Koppelstange eine gerade Linie bildet, befindet.

Der Schwenkbereich der Ansaugklappe lässt sich gemäß einer anderen vorteilhaften Weiterbildung der Erfindung einfach einstellen, wenn der Stellhebel der Ansaugklappe eine andere Länge hat als der Stellhebel der Abgasklappe. Durch diese Gestaltung lässt sich die Abgasklappe von der vollständig geschlossenen Stellung in eine vollständig geöffnete Stellung verschwenken, während die Ansaugklappe von der vollständig geöffneten Stellung nur in eine teilweise geschlossene Stellung verschwenkt wird. Diese Bewegungen werden erreicht, wenn der Stellhebel der Ansaugklappe kürzer ist als der Stellhebel der Abgasklappe.

Eine Blockierung der Bewegungen der Koppelstange an Totpunkten mit den Stellhebeln lässt sich gemäß einer anderen vorteilhaften Weiterbildung der Erfindung einfach vermeiden, wenn die Antriebseinrichtung einen Stellmotor zum Antrieb der Abgasklappe hat. Durch diese Gestaltung wird die Richtung der Übertragung der Bewegung von der Abgasklappe über die Stellhebel und die Koppelstange auf die Ansaugklappe festgelegt.

Das Mischventil gestaltet sich gemäß einer anderen vorteilhaften Weiterbildung der Erfindung konstruktiv besonders einfach, wenn der Abgaskanal rechtwinklig zu dem Ansaugkanal angeordnet ist, wenn in der ersten Stellung die Abgasklappe annähernd parallel zu der Ansaugklappe angeordnet ist und wenn die Stellhebel einander zugewandt sind.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in:
- Fig. 1: schematisch eine Brennkraftmaschine eines Kraftfahrzeuges mit einem erfindungsgemäßen Mischventil,
- Fig. 2: schematisch das Mischventil aus Figur 1 in einer ersten Stellung,
- Fig. 3, 4: das Mischventil aus Figur 2 in mittleren Stellungen,
- Fig. 5: das Mischventil aus Figur 2 in einer Endstellung,
- Fig. 6: den Verlauf von Auslenkwinkeln einer Ansaugklappe und einer Abgasklappe über ein Ansteuersignal.

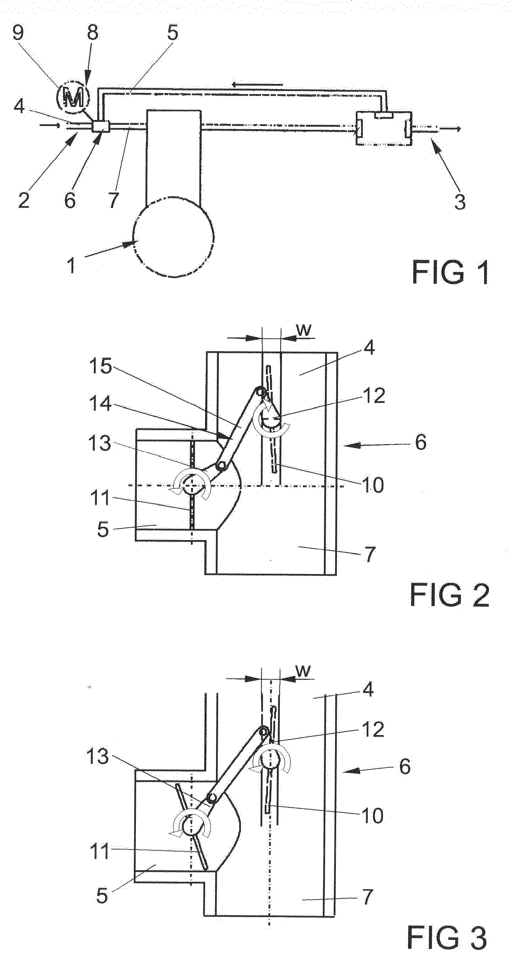

Figur 1 zeigt schematisch eine Brennkraftmaschine 1 mit einer Ansaugleitung 2 und mit einer Abgasleitung 3. Die Ansaugleitung 2 hat einen Ansaugkanal 4, über den Luft aus der Umgebung angesaugt wird. Von der Abgasleitung 3 führt ein Abgaskanal 5 über ein Mischventil 6 in die Ansaugleitung 2. Das Mischventil 6 führt den Ansaugkanal 4 und den Abgaskanal 5 zu einem Sammelkanal 7 zusammen. Der Sammelkanal 7 führt unmittelbar zu der Brennkraftmaschine 1. Eine Antriebseinrichtung 8 mit einem elektrischen Stellmotor 9 ermöglicht eine Verstellung des Mischventils 6.

Figur 2 zeigt eine vergrößerte Schnittdarstellung des Mischventils 6 mit Teilbereichen des Ansaugkanals 4, des Abgaskanals 5 und des Sammelkanals 7. In dem Ansaugkanal 4 ist eine Ansaugklappe 10 angeordnet, welche in der dargestellten ersten Stellung nahezu vollständig geöffnet ist. Eine in dem Abgaskanal 5 angeordnete Abgasklappe 11 ist in der dargestellten ersten Stellung vollständig geschlossen. An Achsen der Ansaugklappe 10 und der Abgasklappe 11 sind jeweils Stellhebel 12, 13 befestigt. Die Stellhebel 12, 13 sind über eine Koppeleinrichtung 14 mit einer Koppelstange 15 verbunden. In der dargestellten ersten Stellung des Mischventils 6 bilden Koppelstange 15 und Stellhebel 13 der Abgasklappe 11 einen stumpfen Winkel, während Koppelstange 15 und Stellhebel 12 der Ansaugklappe 10 einen spitzen Winkel bilden. Bei einem Antrieb des Stellhebels 13 der Abgasklappe 11 gegen den Uhrzeigersinn wird die Koppelstange 15 verschwenkt und bis zu einem in Figur 3 dargestellten Totpunkt in Richtung Stellhebel 12 der Ansaugklappe 10 verschoben. Hierdurch wird die Ansaugklappe 10 im Uhrzeigersinn verschwenkt.

In Figur 3 befindet sich der Stellhebel 13 der Abgasklappe 11 an dem beschriebenen Totpunkt mit der Koppelstange 15. An diesem Totpunkt bilden Koppelstange 15 und Stellhebel 13 der Abgasklappe 11 eine Gerade. Dies kennzeichnet einen Umkehrpunkt der Ansaugklappe 10.

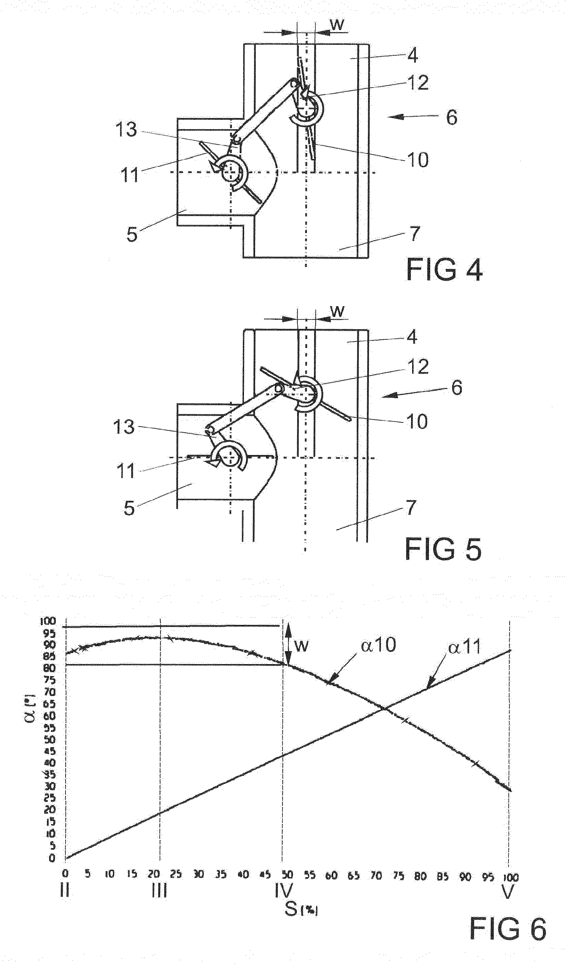

Verschwenkt man ausgehend von der Stellung aus Figur 3 den Stellhebel 13 der Abgasklappe 11 weiter gegen den Uhrzeigersinn, wird die Ansaugklappe 10 über die Koppelstange 15 ebenfalls im Uhrzeigersinn mit verschwenkt. Die Stellungen der Ansaugklappe 10 und der Abgasklappe 11 während dieser Bewegung sind in Figur 4 dargestellt. In den Figuren 2 bis 4 ist ein Wellenschatten W dargestellt. Dieser Wellenschatten W kennzeichnet die Querschnittsverengung des Ansaugkanals 4 durch eine nicht dargestellte Welle, auf der die Ansaugklappe 10 befestigt ist.

Figur 5 zeigt eine Endstellung des Mischventils 6, bei der der Abgaskanal 5 vollständig geöffnet ist. Der Ansaugkanal 4 ist teilweise geschlossen. Durch die Verhältnisse der Längen der Stellhebel 12, 13 lässt sich die Position der Ansaugklappe 10 in dieser Endstellung einstellen.

Figur 6 zeigt den Verlauf des Schwenkwinkels α10 der Ansaugklappe 10 und des Schwenkwinkels α11 der Abgasklappe 11 in Abhängigkeit von einem Ansteuersignal S der Antriebseinrichtung 8 aus Figur 1. Hierbei ist zu erkennen, dass der Schwenkwinkel α11 der Abgasklappe 11 linear mit dem Ansteuersignal S ansteigt. Der Schwenkwinkel α10 der Ansaugklappe 10 schwankt jedoch in einem ersten Bereich in dem Wellenschatten W. Erst wenn die Ansaugklappe 10 aus dem Wellenschatten W austritt, erfolgt der Schließvorgang des Ansaugkanals 4. Zur Verdeutlichung sind in Figur 6 die Stellungen der Abgasklappe 11 und der Ansaugklappe 10 der Figuren 2 bis 5 mit römischen Ziffern II bis V gekennzeichnet.

## Patentansprüche

1. Mischventil (6) einer Brennkraftmaschine (1) eines Kraftfahrzeuges mit einer in einem Ansaugkanal (4) angeordneten Ansaugklappe (10) und einer in einem Abgaskanal (5) angeordneten Abgasklappe (11), wobei der Ansaugkanal (4) und der Abgaskanal (5) in einen gemeinsamen Sammelkanal (7) münden, und mit einer Antriebseinrichtung (8) zum Antrieb der Ansaugklappe (10) und der Abgasklappe (11), und wobei in einer ersten Stellung der Abgaskanal (5) geschlossen und der Ansaugkanal (4) geöffnet ist, mit einer mit einem Stellhebel (13) der Abgasklappe (11) und einem Stellhebel (12) der Ansaugklappe (10) gekoppelten Koppeleinrichtung (14), **dadurch gekennzeichnet, dass** die Koppeleinrichtung (14) eine zur unmittelbaren Übertragung der Bewegungen der Stellhebel (12, 13) ausgebildete Koppelstange (15) hat, dass in der ersten Stellung der Stellhebel (13) der Abgasklappe (11) und die Koppelstange (15) im stumpfen Winkel und der Stellhebel (12) der Ansaugklappe (10) und die Koppelstange (15) im spitzen Winkel zueinander angeordnet sind, und dass ausgehend von der ersten Stellung die Stellhebel (12, 13) und die Koppelstange (15) derart angeordnet sind, dass die Bewegungen der Abgasklappe (11) und der Ansaugklappe (10) gegensinnig verlaufen und nach einer Teilbewegung gleichsinnig verlaufen.

2. Mischventil nach Anspruch 1, **dadurch gekennzeichnet, dass** sich der Stellhebel (11) der Abgasklappe (13) in der ersten Stellung vor einem Totpunkt, an dem dieser Stellhebel (11) mit der Koppelstange (15) eine gerade Linie bildet, befindet.

3. Mischventil nach einem der Ansprüche 1 oder 2, **dadurch gekennzeichnet, dass** der Stellhebel (12) der Ansaugklappe (10) eine andere Länge hat als der Stellhebel (13) der Abgasklappe (11).

4. Mischventil nach einem der Ansprüche 1 bis 3, **dadurch gekennzeichnet, dass** die Antriebseinrichtung (8) einen Stellmotor (9) zum Antrieb der Abgasklappe (11) hat.

5. Mischventil nach einem der Ansprüche 1 bis 4, **dadurch gekennzeichnet, dass** der Abgaskanal (5) rechtwinklig zu dem Ansaugkanal (4) angeordnet ist, dass in der ersten Stellung die Abgasklappe (11) annähernd parallel zu der Ansaugklappe (10) angeordnet ist und dass die Stellhebel (12, 13) einander zugewandt sind.

## Claims

1. Mixing valve (6) of an internal combustion engine (1) of a motor vehicle, having an intake flap (10) arranged in an intake duct (4) and having an exhaust flap (11) arranged in an exhaust duct (5), wherein the intake duct (4) and the exhaust duct (5) issue into a common collecting duct (7), and having a drive device (8) for driving the intake flap (10) and the exhaust flap (11), and wherein, in a first position, the exhaust duct (5) is closed and the intake duct (4) is open, having a coupling device (14) which is coupled to a control lever (13) of the exhaust flap (11) and to a control lever (12) of the intake flap (10), **characterized in that** the coupling device (14) has a coupling rod (15) for direct transmission of the movements of the control levers (12, 13), **in that**, in the first position, the control lever (13) of the exhaust flap (11) and the coupling rod (15) are arranged at an obtuse angle relative to one another, and the control lever (12) of the intake flap (12) and the coupling rod (15) are arranged at an acute angle relative to one another, and **in that**, proceeding from the first position, the control levers (12, 13) and the coupling rod (15) are arranged such that the movements of the exhaust flap (11) and of the intake flap (10) take place in opposite directions and, after a partial movement, take place in the same direction.

2. Mixing valve according to Claim 1, **characterized in that**, in the first position, the control lever (13) of the exhaust flap (11) is situated ahead of a dead center at which said control lever (13) forms a straight line with the coupling rod (15).

3. Mixing valve according to one of Claims 1 and 2, **characterized in that** the control lever (12) of the intake flap (10) is of a different length than the control lever (13) of the exhaust flap (11).

4. Mixing valve according to one of Claims 1 to 3, **characterized in that** the drive device (8) has an actuating motor (9) for driving the exhaust flap (11).

5. Mixing valve according to one of Claims 1 to 4, **characterized in that** the exhaust duct (5) is arranged at right angles to the intake duct (4), **in that**, in the first position, the exhaust flap (11) is arranged approximately parallel to the intake flap (10), and **in that** the control levers (12, 13) face toward one another.

## Revendications

1. Soupape de mélange (6) d'un moteur à combustion interne (1) d'un véhicule automobile, comprenant un clapet d'admission (10) disposé dans un conduit d'admission (4) et un clapet de gaz d'échappement (11) disposé dans un conduit de gaz d'échappement (5), le conduit d'admission (4) et le conduit de gaz d'échappement (5) débouchant dans un conduit de collecte commun (7), et comprenant un dispositif d'entraînement (8) pour entraîner le clapet d'admission (10) et le clapet de gaz d'échappement (11), et où, dans une première position, le conduit de gaz d'échappement (5) étant fermé et le conduit d'admission (4) étant ouvert, comprenant un dispositif de couplage (14) accouplé à un levier de commande (13) du clapet de gaz d'échappement (11) et à un levier de commande (12) du clapet d'admission (10), **caractérisée en ce que** le dispositif de couplage (14) présente une tige de couplage (15) réalisée pour le transfert direct des mouvements des leviers de commande (12, 13), **en ce que** dans la première position, le levier de commande (13) du clapet de gaz d'échappement (11) et la tige de couplage (15) sont disposés l'un par rapport à l'autre suivant un angle obtus et le levier de commande (12) du clapet d'admission (10) et la tige de couplage (15) sont disposés l'un par rapport à l'autre suivant un angle aigu, et **en ce qu'**à partir de la première position, les leviers de commande (12, 13) et la tige de couplage (15) sont disposés de telle sorte que les déplacements du clapet de gaz d'échappement (11) et du clapet d'admission (10) s'étendent en sens inverse et, après un déplacement partiel, s'étendent dans le même sens.

2. Soupape de mélange selon la revendication 1, **caractérisée en ce que** le levier de commande (11) du clapet de gaz d'échappement (13) se trouve dans la première position avant un point mort au niveau duquel ce levier de commande (11) forme avec la tige de couplage (15) une ligne droite.

3. Soupape de mélange selon la revendication 1 ou 2, **caractérisée en ce que** le levier de commande (12) du clapet d'admission (10) présente une longueur différente de celle du levier de commande (13) du clapet de gaz d'échappement (11).

4. Soupape de mélange selon l'une quelconque des revendications 1 à 3, **caractérisée en ce que** le dispositif d'entraînement (8) présente un moteur de commande (9) pour l'entraînement du clapet de gaz d'échappement (11).

5. Soupape de mélange selon l'une quelconque des revendications 1 à 4, **caractérisée en ce que** le conduit de gaz d'échappement (5) est disposé à angle droit par rapport au conduit d'admission (4), **en ce que** dans la première position, le clapet de gaz d'échappement (11) est disposé approximativement parallèlement au clapet d'admission (10) et **en ce que** les leviers de commande (12, 13) sont tournés l'un vers l'autre.
